# EUROPEAN PATENT APPLICATION

(11) **EP 4 074 669 A1**
(43) Date of publication of application: **19.10.2022**
(21) Application number: 20900108.0
(22) Date of filing: 03.12.2020
(51) Int. Cl.: C03C 27/12, B32B 17/10, B60J 1/00

(54) **LAMINATED GLASS INTERLAYER FILM AND LAMINATED GLASS**

(30) Priority: 09.12.2019 JP 2019222386
(71) Applicant: SEKISUI CHEMICAL CO., LTD., Osaka-shi Osaka 530-8565 (JP)
(72) Inventor: IWAMOTO, Tatsuya, Saitama-shi, Saitama 338-0837 (JP); YAMAZAKI, Koushi, Kouka-shi, Shiga 528-8585 (JP); KANEKO, Toshiki, Saitama-shi, Saitama 338-0837 (JP)
(74) Representative: Ter Meer Steinmeister & Partner
(86) International application number: PCT/JP2020/045018
(87) International publication number: WO 2021/117596

(57) **Abstract**

Provided is an interlayer film for laminated glass capable of suppressing occurrence of foaming in an end part of the laminated glass, and increasing the transparency of the laminated glass without conducting a high-temperature and high-pressure process by an autoclave. The interlayer film for laminated glass according to the present invention is an interlayer film for laminated glass, having a one-layer structure or a two or more-layer structure, and includes a first layer, and when a specific compression creep test is conducted for a test sample A having a diameter of 8 mm and a thickness of 0.8 mm obtained by cutting out the first layer, a variation in thickness of the test sample A before and after the compression creep test is 50 µm or more and 325 µm or less.

## Description

### TECHNICAL FIELD

The present invention relates to an interlayer film for laminated glass which is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like.

The laminated glass is typically manufactured by sandwiching an interlayer film for laminated glass between two glass plates, and then conducting a high-temperature and high-pressure process by an autoclave to pressure bond the interlayer film and the glass plates (for example, Patent document 1).

### Related Art Document

### Patent Document

Patent document 1: JP 2009-190947 A

### SUMMARY OF THE INVENTION

### PROBLEMS TO BE SOLVED BY THE INVENTION

The high-temperature and high-pressure process by an autoclave in manufacturing a laminated glass is conducted, for example, under the conditions of 130°C or more and 1 MPa or more. The high-temperature and high-pressure process by an autoclave, however, is a step that requires a large equipment investment, and emits a large quantity of carbon dioxide.

Also, in the interlayer film including a functional film such as a light control film, the functional film can deteriorate during the high-temperature and high-pressure process by an autoclave.

On the other hand, when a laminated glass is manufactured with a conventional interlayer film without conducting a high-temperature and high-pressure process by an autoclave, foaming can occur in an end part of the laminated glass, or the transparency of the laminated glass can deteriorate.

It is an object of the present invention to provide an interlayer film for laminated glass capable of suppressing occurrence of foaming in an end part of the laminated glass, and increasing the transparency of the laminated glass without conducting a high-temperature and high-pressure process by an autoclave. It is also an object of the present invention to provide a laminated glass prepared with the interlayer film for laminated glass.

### MEANS FOR SOLVING THE PROBLEMS

According to a broad aspect of the present invention, there is provided an interlayer film for laminated glass (in the present specification, "interlayer film for laminated glass" is sometimes abbreviated as "interlayer film") having a one-layer structure or a two or more-layer structure, the interlayer film includes a first layer, and when the following compression creep test is conducted for a test sample A having a diameter of 8 mm and a thickness of 0.8 mm obtained by cutting out the first layer, a variation in thickness of the test sample A before and after the compression creep test is 50 µm or more and 325 µm or less.

Compression creep test: in the condition that a load of 410 g is applied to the test sample A, the temperature is raised from 30°C to 90°C at 6°C/minute, and the temperature is retained at 90°C for 5 minutes. An absolute value of difference between a thickness of the test sample A at 30°C directly after 5 minutes retention at 30°C before starting the compression creep test, and a thickness of the test sample A directly after 5 minutes retention at 90°C at the end of the compression creep test is referred to as a variation in thickness of the test sample A before and after the compression creep test.

According to a broad aspect of the present invention, there is provided an interlayer film for laminated glass (in the present specification, "interlayer film for laminated glass" is sometimes abbreviated as "interlayer film") having a one-layer structure or a two or more-layer structure, the interlayer film includes a first layer having a thickness of 200 µm or more and 900 µm or less, and when the first layer has a thickness of T_{B} µm and the following compression creep test is conducted for a test sample B having a diameter of 8 mm and a thickness of T_{B} µm obtained by cutting out the first layer, a variation in thickness of the test sample B before and after the compression creep test is 50 µm or more and 325 µm or less.

Compression creep test: in the condition that a load of 410 g is applied to the test sample B, the temperature is raised from 30°C to 90°C at 6°C/minute, and the temperature is retained at 90°C for 5 minutes. An absolute value of difference between a thickness of the test sample B at 30°C directly after 30 minutes retention at 30°C before starting the compression creep test, and a thickness of the test sample B directly after 5 minutes retention at 90°C at the end of the compression creep test is referred to as a variation in thickness of the test sample B before and after the compression creep test.

According to a broad aspect of the present invention, there is provided an interlayer film for laminated glass (in the present specification, "interlayer film for laminated glass" is sometimes abbreviated as "interlayer film") having a one-layer structure or a two or more-layer structure, the interlayer film includes a first layer, the interlayer film has a thickness of 80 µm or more and 1600 µm or less, and when the interlayer film has a thickness of T_{c} µm and the following compression creep test is conducted for a test sample C having a diameter of 8 mm and a thickness of T_{c} µm obtained by cutting out the interlayer film, a variation in thickness of the test sample C before and after the compression creep test is 50 µm or more and 325 µm or less.

Compression creep test: in the condition that a load of 410 g is applied to the test sample C, the temperature is raised from 30°C to 90°C at 6°C/minute, and the temperature is retained at 90°C for 5 minutes. An absolute value of difference between a thickness of the test sample C at 30°C at the start of the compression creep test, and a thickness of the test sample C directly after 5 minutes retention at 90°C at the end of the compression creep test is referred to as a variation in thickness of the test sample C before and after the compression creep test.

In a specific aspect of the interlayer film according to the present invention, the first layer contains a thermoplastic resin and a plasticizer.

In a specific aspect of the interlayer film according to the present invention, the thermoplastic resin contained in the first layer is a polyvinyl acetal resin.

In a specific aspect of the interlayer film according to the present invention, the interlayer film has a two or more-layer structure, and further includes a second layer, and the second layer is arranged on a first surface side of the first layer.

In a specific aspect of the interlayer film according to the present invention, the first layer is a surface layer in the interlayer film.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

The interlayer film according to the present invention has a one-layer structure or a two or more-layer structure. The interlayer film according to the present invention includes a first layer. In the interlayer film according to the present invention, when the compression creep test is conducted for a test sample A having a diameter of 8 mm and a thickness of 0.8 mm obtained by cutting out the first layer, a variation in thickness of the test sample A before and after the compression creep test is 50 µm or more and 325 µm or less. In the interlayer film according to the present invention, since the above configuration is provided, it is possible to suppress occurrence of foaming in an end part of the laminated glass, and enhance the transparency of the laminated glass without conducting a high-temperature and high-pressure process by an autoclave.

The interlayer film according to the present invention has a one-layer structure or a two or more-layer structure. The interlayer film according to the present invention includes a first layer having a thickness of 200 µm or more and 900 µm or less. In the interlayer film according to the present invention, when the first layer has a thickness of T_{B} µm and the compression creep test is conducted for a test sample B having a diameter of 8 mm and a thickness of T_{B} µm obtained by cutting out the first layer, a variation in thickness of the test sample B before and after the compression creep test is 50 µm or more and 325 µm or less. In the interlayer film according to the present invention, since the above configuration is provided, it is possible to suppress occurrence of foaming in an end part of the laminated glass, and enhance the transparency of the laminated glass without conducting a high-temperature and high-pressure process by an autoclave.

The interlayer film according to the present invention has a one-layer structure or a two or more-layer structure. The interlayer film according to the present invention includes a first layer. In the interlayer film according to the present invention, the interlayer film has a thickness of 80 µm or more and 1600 µm or less. In the interlayer film according to the present invention, when the interlayer film has a thickness of T_{c} µm and the compression creep test is conducted for a test sample C having a diameter of 8 mm and a thickness of T_{c} µm obtained by cutting out the interlayer film, a variation in thickness of the test sample C before and after the compression creep test is 50 µm or more and 325 µm or less. In the interlayer film according to the present invention, since the above configuration is provided, it is possible to suppress occurrence of foaming in an end part of the laminated glass, and enhance the transparency of the laminated glass without conducting a high-temperature and high-pressure process by an autoclave.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an interlayer film for laminated glass in accordance with a third embodiment of the present invention.
[Fig. 4] Fig. 4 is a sectional view schematically showing an example of laminated glass prepared with the interlayer film for laminated glass shown in Fig. 1.
[Fig. 5] Figs. 5(a) to 5(e) show examples of photographic images used for evaluation of foaming in an end part of laminated glass.
[Fig. 6] Figs. 5(a) to 5(e) show examples of photographic images used for evaluation of transparency of laminated glass.

### MODES FOR CARRYING OUT THE INVENTION

Hereinafter, the details of the present invention will be described.

### (Interlayer film for laminated glass)

The interlayer film for laminated glass according to the present invention (hereinafter, sometimes abbreviated as "interlayer film") has a one-layer structure or a two or more-layer structure. The interlayer film according to the present invention includes a first layer. In the interlayer film according to the present invention, when the following compression creep test is conducted for a test sample A having a diameter of 8 mm and a thickness of 0.8 mm obtained by cutting out the first layer, a variation in thickness of the test sample A before and after the compression creep test is 50 µm or more and 325 µm or less.

Compression creep test: in the condition that a load of 410 g is applied to the test sample A, the temperature is raised from 30°C to 90°C at 6°C/minute, and the temperature is retained at 90°C for 5 minutes. An absolute value of difference between a thickness of the test sample A at 30°C directly after 5 minutes retention at 30°C before starting the compression creep test, and a thickness of the test sample A directly after 5 minutes retention at 90°C at the end of the compression creep test is referred to as a variation in thickness of the test sample A before and after the compression creep test.

Specifically, a load of 410 g is applied on the test sample A in an environment of 30°C, the temperature is retained at 30°C for 5 minutes under application of the load, and a thickness of the test sample A at 30°C directly after the 5 minutes retention at 30°C is measured. Also, a load of 410 g is applied on the test sample A in an environment of 30°C, the temperature is retained at 30°C for 5 minutes under application of the load, and subsequently the temperature is raised from 30°C to 90°C at 6°C/minute, the temperature is retained at 90°C for 5 minutes, and a thickness of the test sample A at 90°C directly after the 5 minutes retention at 90°C is measured. The load of 410 g is applied to the test sample A until the thickness of the test sample A at 90°C directly after the 5 minutes retention at 90°C is measured, and the thickness is measured under application of the load.

The interlayer film for laminated glass according to the present invention (hereinafter, sometimes abbreviated as "interlayer film") has a one-layer structure or a two or more-layer structure. The interlayer film according to the present invention includes a first layer having a thickness of 200 µm or more and 900 µm or less. In the interlayer film according to the present invention, when the first layer has a thickness of T_{B} µm and the following compression creep test is conducted for a test sample B having a diameter of 8 mm and a thickness of T_{B} µm obtained by cutting out the first layer, a variation in thickness of the test sample B before and after the compression creep test is 50 µm or more and 325 µm or less.

Compression creep test: in the condition that a load of 410 g is applied to the test sample B, the temperature is raised from 30°C to 90°C at 6°C/minute, and the temperature is retained at 90°C for 5 minutes. An absolute value of difference between a thickness of the test sample B at 30°C directly after 30 minutes retention at 30°C before starting the compression creep test, and a thickness of the test sample B directly after 5 minutes retention at 90°C at the end of the compression creep test is referred to as a variation in thickness of the test sample B before and after the compression creep test.

Specifically, a load of 410 g is applied on the test sample B in an environment of 30°C, the temperature is retained at 30°C for 30 minutes under application of the load, and a thickness of the test sample B at 30°C directly after the 30 minutes retention at 30°C is measured. Also, a load of 410 g is applied on the test sample B in an environment of 30°C, the temperature is retained at 30°C for 30 minutes under application of the load, and subsequently the temperature is raised from 30°C to 90°C at 6°C/minute, the temperature is retained at 90°C for 5 minutes, and a thickness of the test sample B at 90°C directly after the 5 minutes retention at 90°C is measured. The load of 410 g is applied to the test sample B until the thickness of the test sample B at 90°C directly after the 5 minutes retention at 90°C is measured, and the thickness is measured under application of the load.

The interlayer film for laminated glass according to the present invention (hereinafter, sometimes abbreviated as "interlayer film") has a one-layer structure or a two or more-layer structure. The interlayer film according to the present invention includes a first layer. In the interlayer film according to the present invention, the interlayer film has a thickness of 80 µm or more and 1600 µm or less. In the interlayer film according to the present invention, when the interlayer film has a thickness of T_{c} µm and the following compression creep test is conducted for a test sample C having a diameter of 8 mm and a thickness of T_{c} µm obtained by cutting out the interlayer film, a variation in thickness of the test sample C before and after the compression creep test is 50 µm or more and 325 µm or less.

Compression creep test: in the condition that a load of 410 g is applied to the test sample C, the temperature is raised from 30°C to 90°C at 6°C/minute, and the temperature is retained at 90°C for 5 minutes. An absolute value of difference between a thickness of the test sample C at 30°C at the start of the compression creep test, and a thickness of the test sample C directly after 5 minutes retention at 90°C at the end of the compression creep test is referred to as a variation in thickness of the test sample C before and after the compression creep test.

Specifically, a load of 410 g is applied on the test sample C in an environment of 30°C, and a thickness of the test sample C at 30°C directly after application of the load is measured. Also, a load of 410 g is applied on the test sample C in an environment of 30°C, the temperature is raised from 30°C to 90°C at 6°C/minute directly after application of the load under application of the load, and subsequently the temperature is retained at 90°C for 5 minutes, and a thickness of the test sample C at 90°C directly after the 5 minutes retention at 90°C is measured. The load of 410 g is applied to the test sample C until the thickness of the test sample C at 90°C directly after the 5 minutes retention at 90°C is measured, and the thickness is measured under application of the load.

In the interlayer film according to the present invention, since the above configuration is provided, it is possible to suppress occurrence of foaming in an end part of the laminated glass, and enhance the transparency of the laminated glass without conducting a high-temperature and high-pressure process by an autoclave.

In the interlayer film according to the present invention, it is possible to produce a laminated glass under conditions of lower temperature and lower pressure (for example, 100°C or less and 0.5 MPa or less) compared with the high-temperature and high-pressure process by an autoclave. Therefore, it is possible to produce a laminated glass without necessity of making a large equipment investment for the equipment such as an autoclave facility, and it is possible to reduce the emission of carbon dioxide in production of the laminated glass. Further, it is possible to maintain the productivity achieved by the conventional method for producing laminated glass in which an autoclave processing is conducted.

Also, in the interlayer film according to the present invention, it is possible to enhance the penetration resistance of the laminated glass.

The interlayer film according to the present invention has a one-layer structure or a two or more-layer structure. The interlayer film according to the present invention may have a one-layer structure, may have a two-layer structure, may have a two or more-layer structure, ma have a three-layer structure, may have a three or more-layer structure, and may have a four or more-layer structure. The interlayer film according to the present invention includes a first layer. The interlayer film according to the present invention may be a single-layered interlayer film including only a first layer or may be a multi-layered interlayer film including a first layer and other layer.

The interlayer film may have a two or more-layer structure and may include a second layer in addition to the first layer. When the interlayer film includes the second layer, the second layer is arranged on a first surface side of the first layer.

When the interlayer film is a multilayer interlayer film having a two or more- layer structure, the interlayer film has a first surface layer and a second surface layer.

It is preferred that the interlayer film include the first layer as a surface layer in the interlayer film. It is preferred that the first layer be a surface layer of the interlayer film. It is preferred that the interlayer film include the first layer as the first surface layer, and it is more preferred that the interlayer film include the first layer as the first surface layer and the second surface layer. In this case, the effect of the present invention can be exerted more effectively. When the interlayer film is a single-layered interlayer film including only the first layer, the first layer is a surface layer.

The interlayer film may have a three or more-layer structure and may include a third layer in addition to the first layer and the second layer. When the interlayer film includes the third layer, the third layer is arranged on a surface side opposite to the first layer of the second layer.

Hereinafter, the compression creep test conducted in the present invention is described more specifically.

The test sample A is a test sample having a diameter of 8 mm and a thickness of 0.8 mm obtained by cutting out the first layer. The test sample A can be prepared by peeling off the layer to be measured (first layer) from the interlayer film, followed by press-molding at 150°C. The test sample A is prepared for conducting a compression creep test.

The test sample B is prepared by using the first layer having a thickness of 200 µm or more and 900 µm or less. When the first layer has a thickness of T_{B} µm, the test sample B is a test sample having a diameter of 8 mm and a thickness of T_{B} µm obtained by cutting out the first layer. Therefore, the thickness of the first layer and the thickness of the test sample B are the same.

The test sample C is prepared by using the interlayer film having a thickness of 80 µm or more and 1600 µm or less. When the interlayer film has a thickness of T_{c} µm, the test sample C is a test sample having a diameter of 8 mm and a thickness of T_{c} µm obtained by cutting out the interlayer film. Therefore, the thickness of the interlayer film and the thickness of the test sample C are the same.

In the compression creep test, the test sample A, B, C is arranged between the first jig having a circular surface with a diameter of 8 mm, and a second jig having a circular surface with a diameter of 8 mm. In the condition that a load of 410 g is applied in the thickness direction of the test sample A, B, C, the temperature is raised from 30°C to 90°C at 6°C/minute, and the temperature is retained at 90°C for 5 minutes. An absolute value of difference between a thickness of the test sample A, B, C at 30°C directly after 5 minutes or 30 minutes retention at 30°C before starting the compression creep test, and a thickness of the test sample A, B, C directly after 5 minutes retention at 90°C at the end of the compression creep test is referred to as a variation in thickness of the test sample A, B, C before and after the compression creep test. The thickness of the test sample A, B, C after the compression creep test is ordinarily smaller than the thickness of the test sample A, B, C before the compression creep test.

As an apparatus that can be used in the compression creep test, for example, a viscoelasticity measuring apparatus ("RSA-G2" available from TA Instruments) and the like can be recited. The thickness of the test sample A, B, C before or after the compression creep test can be measured by monitoring the gap between the jigs for compression measurement of the viscoelasticity measuring apparatus. When RSA-G2 is used, the measurement may be performed while the transducer mode is set to "spring".

In the interlayer film, when the compression creep test is conducted for the test sample A, a variation in thickness of the test sample A before and after the compression creep test is 50 µm or more and 325 µm or less. If the variation is less than 50 µm, the transparency of the laminated glass tends to deteriorate. If the variation is more than 325 µm, foaming tends to occur in an end part of laminated glass.

The variation in thickness of the test sample A before and after the compression creep test is preferably 75 µm or more, more preferably 100 µm or more, and is preferably 300 µm or less, more preferably 250 µm or less. When the variation is the above lower limit or more, it is possible to further enhance the transparency of laminated glass. When the variation is the above upper limit or less, it is possible to suppress the occurrence of foaming in an end part of laminated glass more effectively.

In the interlayer film, when the compression creep test is conducted for the test sample B, the variation in thickness of the test sample B before and after the compression creep test is 50 µm or more and 325 µm or less. If the variation is less than 50 µm, the transparency of the laminated glass tends to deteriorate. If the variation is more than 325 µm, foaming tends to occur in an end part of laminated glass.

The variation in thickness of the test sample B before and after the compression creep test is preferably 75 µm or more, more preferably 100 µm or more, and is preferably 300 µm or less, more preferably 250 µm or less. When the variation is the above lower limit or more, it is possible to further enhance the transparency of laminated glass. When the variation is the above upper limit or less, it is possible to suppress the occurrence of foaming in an end part of laminated glass more effectively.

In the interlayer film, when the compression creep test is conducted for the test sample C, the variation in thickness of the test sample C before and after the compression creep test is 50 µm or more and 325 µm or less. If the variation is less than 50 µm, the transparency of the laminated glass tends to deteriorate. If the variation is more than 325 µm, foaming tends to occur in an end part of laminated glass.

The variation in thickness of the test sample C before and after the compression creep test is preferably 75 µm or more, more preferably 100 µm or more, and is preferably 300 µm or less, more preferably 250 µm or less. When the variation is the above lower limit or more, it is possible to further enhance the transparency of laminated glass. When the variation is the above upper limit or less, it is possible to suppress the occurrence of foaming in an end part of laminated glass more effectively.

As a method for controlling the variation in thickness of the test sample A, B, C before and after the compression creep test to fall within the aforementioned preferred range or the like, the following methods are recited. (1) As the average polymerization degree of the thermoplastic resin contained in the first layer or the interlayer film is increased, the variation decreases. (2) As the content of the plasticizer contained in the first layer or the interlayer film is increased, the variation increases. (3) As the hydrogen bonding strength of the resin contained in the first layer or the interlayer film is strengthened, the variation decreases. By appropriately combining these methods, it is possible to control the variation to fall within the aforementioned preferred range or the like.

Hereinafter, specific embodiments of the present invention will be described with reference to the drawings.

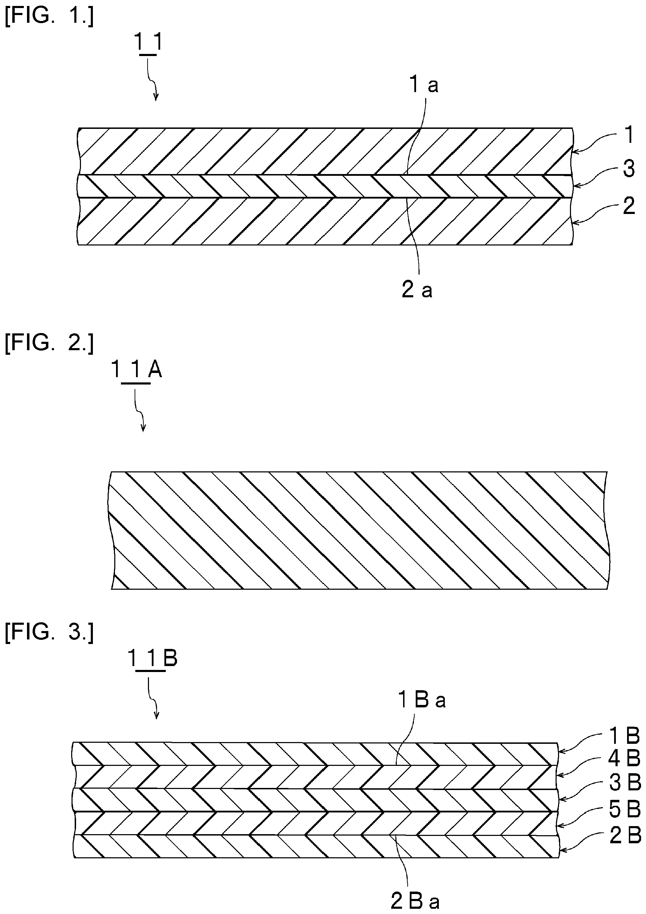

Fig. 1 is a sectional view schematically showing an interlayer film for laminated glass in accordance with a first embodiment of the present invention.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 includes a first surface layer 1, an intermediate layer 3, and a second surface layer 2. The interlayer film 11 has a three-layer structure. The intermediate layer 3 is arranged on a first surface 1a of the first surface layer 1 to be layered thereon. The intermediate layer 3 is arranged on a first surface 2a of the second surface layer 2 to be layered thereon. The first surface layer 1 and the second surface layer 2 each are the first layer. The second layer which is the intermediate layer 3 is arranged on the first surface side of the first layer which is the surface layer. The intermediate layer 3 is arranged between the first surface layer 1 and the second surface layer 2 to be sandwiched therebetween. Therefore, the interlayer film 11 has a multilayer structure (first layer/second layer/first layer) in which the first layer, the second layer and the first layer are layered in this order. In this case, the two first layers may be distinguished from each other, and called the first layer A and the first layer B, respectively.

Fig. 2 is a sectional view schematically showing an interlayer film for laminated glass in accordance with a second embodiment of the present invention.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass.

Fig. 3 is a sectional view schematically showing an interlayer film for laminated glass in accordance with a third embodiment of the present invention.

An interlayer film 11B shown in Fig. 3 is a multi-layered interlayer film having a two or more-layer structure. The interlayer film 11B is used for obtaining laminated glass. The interlayer film 11B is an interlayer film for laminated glass. The interlayer film 11B includes a first surface layer 1B, a second intermediate layer 4B, a first intermediate layer 3B, a third intermediate layer 5B, and a second surface layer 2B. The interlayer film 11B has a five-layer structure. The second intermediate layer 4B is arranged on a first surface 1Ba of the first surface layer 1B to be layered thereon. The third intermediate layer 5B is arranged on a first surface 2Ba of the second surface layer 2B to be layered thereon. The first surface layer 1B and the second surface layer 2B each are the first layer. The second layer which is the second intermediate layer 4B is arranged on the first surface 1Ba side of the first layer which is the first surface layer 1B. The third layer which is the third intermediate layer 5B is arranged on the first surface 2Ba side of the first layer which is the second surface layer 2B. A functional film which is the first intermediate layer 3B is arranged between the second intermediate layer 4B and the third intermediate layer 5B to be sandwiched therebetween. The functional film is, in the present embodiment, a light control film. Therefore, the interlayer film 11B has a multilayer structure (first layer/second layer/functional film/third layer/first layer) in which the first layer, the second layer, the functional film, the third layer and the first layer are layered in this order. In this case, the two first layers may be distinguished from each other, and called the first layer A and the first layer B, respectively.

A glass transition temperature of the first layer or the surface layer is preferably 20°C or more, more preferably 25°C or more, further preferably 30°C or more, and is preferably 45°C or less, more preferably 40°C or less, further preferably 35°C or less. When the glass transition temperature of the first layer or the surface layer is the above lower limit or more and the above upper limit or less, it is possible to exert the effect of the present invention more effectively. Also, when the glass transition temperature of the first layer or the surface layer is the above upper limit or less, it is possible to further enhance the penetration resistance.

A softening point of the first layer or the surface layer is preferably 45°C or more, more preferably 50°C or more, and is preferably 70°C or less, more preferably 65°C or less. When the softening point of the first layer or the surface layer is the above lower limit or more and the above upper limit or less, it is possible to exert the effect of the present invention more effectively. Also, when the softening point of the first layer or the surface layer is the above upper limit or less, it is possible to further enhance the penetration resistance.

The glass transition temperature and the softening point are determined by measurement of viscoelasticity. The viscoelasticity measurement is conducted specifically in the following manner.

The test piece is stored for 12 hours in an environment of 23 ± 2°C temperature, 25 ± 5% humidity. Then, viscoelasticity is measured using a viscoelasticity measuring device "ARES-G2" available from TA Instruments. A parallel plate with a diameter of 8 mm is used as a jig, and the measurement is performed in a shearing mode under the condition in which the temperature is decreased from 100°C to -20°C at a temperature decreasing rate of 3°C/minute and under the condition of a frequency of 1 Hz and a strain of 1%. In the measurement results obtained, the peak temperature of the loss tangent is defined as the glass transition temperature Tg (°C) . The temperature at which the value of the loss tangent minimizes in the temperature region between Tg (°C) and 100°C is defined as the softening point.

The viscoelasticity measurement may be conducted using an interlayer film itself. In this case, a peak of tanδ and the like originated in the first layer may be read from the measurement result. For an interlayer film having a two or more-layer structure, the layers may be delaminated, and the glass transition temperature of the layer to be measured may be measured. In the case of a laminated glass, after cooling the laminated glass with liquid nitrogen or the like, the lamination glass member and the interlayer film are delaminated, and the viscoelasticity measurement may be conducted using the delaminated interlayer film.

Hereinafter, the details of the interlayer film according to the present invention, the first layer, the second layer and the third layer, and each ingredient used in the interlayer film will be described.

### (Thermoplastic resin)

It is preferred that the interlayer film contain a thermoplastic resin (hereinafter, sometimes described as a thermoplastic resin (0)). Examples of the thermoplastic resin include a polyvinyl acetate resin, a polyester resin, a polyvinyl acetal resin, a vinyl acetate resin, a polystyrene resin, an ethylene-vinyl acetate copolymer resin, an ethyleneacrylic acid copolymer resin, a polyurethane resin, an ionomer resin, a polyvinyl alcohol resin, a polyolefin resin such as aliphatic polyolefin, and a (meth)acrylic resin (polymer having a (meth)acryloyl group) and the like. The polyoxymethylene (or polyacetal) resin is included in the polyvinyl acetal resin. Thermoplastic resins other than these may be used as the thermoplastic resin. The thermoplastic resin may be a thermoplastic elastomer.

It is preferred that the interlayer film contain a polyvinyl acetal resin (hereinafter, sometimes described as a polyvinyl acetal resin (0)) as the thermoplastic resin (0). It is preferred that the thermoplastic resin (0) contained in the interlayer film be a polyvinyl acetal resin (0). It is preferred that the first layer (including a single-layered interlayer film) contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the thermoplastic resin (1) contained in the first layer be the polyvinyl acetal resin (1). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) or a polyester resin as the thermoplastic resin (2). It is preferred that the thermoplastic resin (2) contained in the second layer be the polyvinyl acetal resin (2) or a polyester resin. It is preferred that the third layer contain a thermoplastic resin (hereinafter, sometimes described as a thermoplastic resin (3)) or a polyester resin. It is preferred that the third layer contain a polyvinyl acetal resin (hereinafter, sometimes described as a polyvinyl acetal resin (3)) or a polyester resin as the thermoplastic resin (3). It is preferred that the thermoplastic resin (3) contained in the third layer be the polyvinyl acetal resin (3) or a polyester resin. The thermoplastic resin (1), the thermoplastic resin (2), and the thermoplastic resin (3) may be the same or different from one another. For still higher sound insulating properties, it is preferred that the thermoplastic resin (1) be different from the thermoplastic resin (2) and the thermoplastic resin (3). Each of the polyvinyl acetal resin (1), the polyvinyl acetal resin (2) and the polyvinyl acetal resin (3) may be the same or different from one another. For still higher sound insulating properties, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, still more preferably 1500 or more, further preferably 1600 or more, especially preferably 2600 or more, most preferably 2700 or more, and is preferably 5000 or less, more preferably 4000 or less, further preferably 3500 or less. When the average polymerization degree is the above lower limit or more, the penetration resistance of laminated glass is further enhanced. When the average polymerization degree is the above upper limit or less, formation of an interlayer film is facilitated.

The polymerization degree of the polyvinyl acetate is determined by a method conforming to JIS K6726 "Testing methods for polyvinyl acetate".

The polyvinyl acetal resin (1) may be a mixture of two or more kinds of polyvinyl acetal resins having different average polymerization degrees of polyvinyl alcohol. In this case, it is preferred that the polyvinyl acetal resin (1) be a mixture of a first polyvinyl acetal resin (1A) having an average polymerization degree of polyvinyl alcohol of 1500 or more, and a second polyvinyl acetal resin (1B) having an average polymerization degree of polyvinyl alcohol of 1000 or less.

The average polymerization degree of polyvinyl alcohol of the polyvinyl acetal resin (1) is preferably 900 or more, more preferably 1000 or more, and is preferably 1400 or less, more preferably 1300 or less.

The average polymerization degree of polyvinyl alcohol of the first polyvinyl acetal resin (1A) is preferably 1500 or more, more preferably 1600 or more, and is preferably 2000 or less, more preferably 1800 or less.

The average polymerization degree of polyvinyl alcohol of the second polyvinyl acetal resin (1B) is preferably 400 or more, more preferably 500 or more, and is preferably 1000 or less, more preferably 900 or less.

When the mixture of two or more kinds of polyvinyl acetal resins (1A) and (1B) having different average polymerization degrees of polyvinyl alcohol are used, an absolute value of difference in average polymerization degree is preferably 500 or more, more preferably 600 or more, and is preferably 1200 or less, more preferably 1100 or less.

The content of the second polyvinyl acetal resin (1B) in 100% by weight of the total of the first polyvinyl acetal resin (1A) and the second polyvinyl acetal resin (1B) is preferably 20% by weight or more, more preferably 25% by weight or more, and is preferably 80% by weight or less, more preferably 75% by weight or less. When the content of the second polyvinyl acetal resin (1B) is the above lower limit or more and the above upper limit or less, it is possible to exert the effect of the present invention more effectively.

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde with 1 to 10 carbon atoms is preferably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

It is preferred that the interlayer film contain a polyvinyl butyral resin as the thermoplastic resin (0). It is preferred that the interlayer film contain a polyvinyl butyral resin as the polyvinyl acetal resin (0). It is preferred that the thermoplastic resin (0) contained in the interlayer film be a polyvinyl butyral resin. It is preferred that the first layer contain a polyvinyl butyral resin as the thermoplastic resin (1). It is preferred that the first layer contain a polyvinyl butyral resin as the polyvinyl acetal resin (1). It is preferred that the thermoplastic resin (1) contained in the first layer be a polyvinyl butyral resin. It is preferred that the second layer contain a polyvinyl butyral resin as the thermoplastic resin (2). It is preferred that the second layer contain a polyvinyl butyral resin as the polyvinyl acetal resin (2). It is preferred that the thermoplastic resin (2) contained in the second layer be a polyvinyl butyral resin. It is preferred that the third layer contain a polyvinyl butyral resin as the thermoplastic resin (3). It is preferred that the third layer contain a polyvinyl butyral resin as the polyvinyl acetal resin (3). It is preferred that the thermoplastic resin (3) contained in the third layer be a polyvinyl butyral resin. As each polyvinyl butyral resin contained in the interlayer film, the first layer, the second layer and the third layer, only one kind of polyvinyl butyral resin may be used, or a combination of two or more kinds of polyvinyl butyral resins may be used.

The content of the hydroxyl group (the amount of hydroxyl groups) of the polyvinyl acetal resin (0) is preferably 15% by mole or more, more preferably 18% by mole or more and is preferably 40% by mole or less, more preferably 35% by mole or less. When the content of the hydroxyl group is the above lower limit or more, the adhesive strength of the interlayer film is further enhanced. Moreover, when the content of the hydroxyl group is the above upper limit or less, the flexibility of the interlayer film is enhanced and the handling of the interlayer film is facilitated.

The content of the hydroxyl group (the amount of hydroxyl groups) of the polyvinyl acetal resin (1) is preferably 25% by mole or more, more preferably 28% by mole or more, more preferably 30% by mole or more, still more preferably 31.5% by mole or more, further preferably 32% by mole or more, especially preferably 33% by mole or more. The content of the hydroxyl group (the amount of hydroxyl groups) of the polyvinyl acetal resin (1) is preferably 38% by mole or less, more preferably 37% by mole or less, further preferably 36.5% by mole or less, and especially preferably 36% by mole or less. When the content of the hydroxyl group is the above lower limit or more, the adhesive strength of the interlayer film is further enhanced. Moreover, when the content of the hydroxyl group is the above upper limit or less, the flexibility of the interlayer film is enhanced and the handling of the interlayer film is facilitated.

Each of the contents of the hydroxyl group of the polyvinyl acetal resin (2) and the polyvinyl acetal resin (3) is preferably 10% by mole or more, more preferably 15% by mole or more, further preferably 17% by mole or more, and is preferably 25% by mole or less, more preferably 20% by mole or less, further preferably 19% by mole or less, especially preferably 18% by mole or less. When the content of the hydroxyl group is the above lower limit or more, the mechanical strength of the interlayer film is further enhanced. In particular, when the content of the hydroxyl group of the polyvinyl acetal resin (2), (3) is 15% by mole or more, the resin is high in reaction efficiency and is excellent in productivity, and moreover, when being 25% by mole or less, the sound insulating property of laminated glass is further enhanced. Moreover, when the content of the hydroxyl group is the above upper limit or less, the flexibility of the interlayer film is enhanced and the handling of the interlayer film is facilitated.

From the viewpoint of further enhancing the sound insulating property, it is preferred that the content of the hydroxyl group of the polyvinyl acetal resin (1) be higher than the content of the hydroxyl group of the polyvinyl acetal resin (2). From the viewpoint of further enhancing the sound insulating property, it is preferred that the content of the hydroxyl group of the polyvinyl acetal resin (1) be higher than the content of the hydroxyl group of the polyvinyl acetal resin (3). From the viewpoint of still further enhancing the sound insulating properties, the absolute value of difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating properties, the absolute value of difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. The absolute value of a difference between the content of the hydroxyl group of the polyvinyl acetal resin (1) and the content of the hydroxyl group of the polyvinyl acetal resin (2) and the absolute value of a difference between the content of the hydroxyl group of the polyvinyl acetal resin (1) and the content of the hydroxyl group of the polyvinyl acetal resin (3) are preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree (the amount of acetyl groups) of the polyvinyl acetal resin (1) is preferably 0.01% by mole or more, more preferably 0.5% by mole or more and is preferably 10% by mole or less, more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree of each of the polyvinyl acetal resin (2) and the polyvinyl acetal resin (3) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced. In particular, when the acetylation degree of the polyvinyl acetal resin (2), (3) is 0.1% by mole or more and is 25% by mole or less, the resulting laminated glass is excellent in penetration resistance.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more and more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 55% by mole or more, more preferably 60% by mole or more and is preferably 75% by mole or less, and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 47% by mole or more, more preferably 60% by mole or more and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the interlayer film, the content of the polyvinyl acetal resin is preferably 100% by weight or less. It is preferred that the main ingredient (50% by weight or more) of the thermoplastic resin of the interlayer film be a polyvinyl acetal resin.

In 100% by weight of the thermoplastic resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first layer, the content of the polyvinyl acetal resin is preferably 100% by weight or less. It is preferred that the main ingredient (50% by weight or more) of the thermoplastic resin of the first layer be a polyvinyl acetal resin.

### (Plasticizer)

It is preferred that the interlayer film contain a plasticizer. It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or by using a polyvinyl acetal resin and a plasticizer together, the impact resistance and the penetration resistance are further improved, and the adhesive strength of a layer containing the polyvinyl acetal resin and the plasticizer to a lamination glass member or another layer is moderately increased. The plasticizer is not particularly limited. The plasticizer (1), the plasticizer (2) and the plasticizer (3) may be the same as or different from one another. One kind of each of the plasticizer (1), the plasticizer (2) and the plasticizer (3) may be used alone, and two or more kinds thereof may be used in combination.

Examples of the plasticizer include organic ester plasticizers such as a monobasic organic acid ester and a polybasic organic acid ester, and organic phosphate plasticizers such as an organic phosphate plasticizer and an organic phosphite plasticizer, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

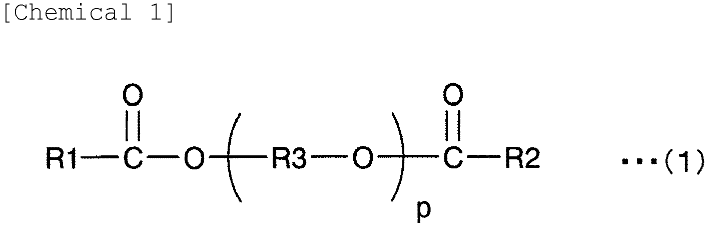

In the formula (1), R1 and R2 each represent an organic group with 2 to 10 carbon atoms, R3 represents an ethylene group, an isopropylene group, or an n-propylene group, and p represents an integer of 3 to 10. R1 and R2 in the formula (1) each are preferably an organic group with 5 to 10 carbon atoms, and more preferably an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate.

In the first layer, the content of the plasticizer (1) per 100 parts by weight of the thermoplastic resin (1) (100 parts by weight of polyvinyl acetal resin (1) when the thermoplastic resin (1) is the polyvinyl acetal resin (1)) is referred to as a content (1). The content (1) is preferably 20 parts by weight or more, more preferably 25 parts by weight or more, further preferably 28 parts by weight or more, and is preferably 40 parts by weight or less, more preferably 38 parts by weight or less, further preferably 35 parts by weight or less, especially preferably 33 parts by weight or less. When the content (1) is the above lower limit or more, the flexibility of the interlayer film is enhanced and the handling of the interlayer film is facilitated. When the content (1) is the above lower limit or more, the flexibility of the interlayer film is enhanced and the handling of the interlayer film is facilitated. When the content (1) is the above upper limit or less, the flexural rigidity is further enhanced. When the content (1) is the above lower limit or more and the above upper limit or less, it is possible to exert the effect of the present invention more effectively.

In the second layer, the content of the plasticizer (2) per 100 parts by weight of the thermoplastic resin (2) (100 parts by weight of polyvinyl acetal resin (2) when the thermoplastic resin (2) is the polyvinyl acetal resin (2)) is referred to as a content (2). The content (2) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (2) is the above lower limit or more, the flexibility of the interlayer film is enhanced and the handling of the interlayer film is facilitated. When the content (2) is the above upper limit or less, the penetration resistance of laminated glass is further enhanced.

In the third layer, the content of the plasticizer (3) per 100 parts by weight of the thermoplastic resin (3) (100 parts by weight of polyvinyl acetal resin (3) when the thermoplastic resin (3) is the polyvinyl acetal resin (3)) is referred to as a content (3). The content (3) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (3) is the above lower limit or more, the flexibility of the interlayer film is enhanced and the handling of the interlayer film is facilitated. When the content (3) is the above upper limit or less, the penetration resistance of laminated glass is further enhanced.

The content (1) and the content (2) may be the same or different from each other. The content (1) and the content (3) may be the same or different from each other. From the viewpoint of enhancing the sound insulating property of laminated glass, it is preferred that the content (1) and the content (2) be the same, or the content (1) be smaller than the content (2), and it is more preferred that the content (1) be smaller than the content (2). From the viewpoint of enhancing the sound insulating property of laminated glass, it is preferred that the content (1) and the content (3) be the same, or the content (1) be smaller than the content (3), and it is more preferred that the content (1) be smaller than the content (3).

From the viewpoint of further heightening the sound insulating property of laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. Each of the absolute value of difference between the content (2) and the content (1) and the absolute value of difference between the content (3) and the content (1) is preferably 80 parts by weight or less, more preferably 75 parts by weight or less, and further preferably 70 parts by weight or less.

### (Heat shielding substance)

It is preferred that the interlayer film contain a heat shielding substance. It is preferred that the first layer (including a single-layered interlayer film) contain a heat shielding substance. It is preferred that the second layer contain a heat shielding substance. It is preferred that the third layer contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding compound may be constituted of both of the Ingredient X and the heat shielding particles.

### Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. The Ingredient X is a heat shielding substance. One kind of the Ingredient X may be used alone and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

From the viewpoint of further enhancing the heat shielding property of the interlayer film and the laminated glass, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding property of the laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodiumdoped tungsten oxide particles, cesium-doped tungsten oxide particles, thallium-doped tungsten oxide particles, rubidiumdoped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding property of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, and is preferably 0.1 µm or less, more preferably 0.05 µm or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), each content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), each content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### (Metal salt)

It is preferred that the interlayer film contain at least one kind of metal salt (hereinafter, sometimes described as Metal salt M) among alkali metal salts, alkali earth metal salts other than magnesium salts, and magnesium salts. Also, since magnesium is an alkali earth metal, it is preferred that the interlayer film contain at least one kind of Metal salt M among alkali metal salts and alkali earth metal salts. It is preferred that the first layer contain the Metal salt M. It is preferred that the second layer contain the Metal salt M. It is preferred that the third layer contain the Metal salt M. The alkali earth metal means six metals of Be, Mg, Ca, Sr, Ba, and Ra. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt contained in the interlayer film contain at least one kind of metal between K and Mg.

It is more preferred that the Metal salt M be an alkali metal salt of an organic acid with 2 to 16 carbon atoms, an alkali earth metal salt of an organic acid with 2 to 16 carbon atoms other than a magnesium salt of an organic acid with 2 to 16 carbon atoms, or a magnesium salt of an organic acid with 2 to 16 carbon atoms. Also, since magnesium is an alkali earth metal, it is more preferred that the Metal salt M be an alkali metal salt of an organic acid having 2 to 16 carbon atoms, or an alkali earth metal salt of an organic acid having 2 to 16 carbon atom. It is further preferred that the Metal salt M be a magnesium salt of a carboxylic acid having 2 to 16 carbon atoms, or a potassium salt of a carboxylic acid having 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film containing the Metal salt M or a layer containing the Metal salt M (a first layer, a second layer, or a third layer) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member (e.g., glass plate) or the adhesivity between respective layers in the interlayer film can be further well controlled.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. When the content of the ultraviolet ray screening agent is the above lower limit or more and the above upper limit or less, deterioration in visible light transmittance after a lapse of a period can be further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, and 2,2'-methylenebis(4,6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

For maintaining high visible light transmittance of the interlayer film and the laminated glass over a long period of time, it is preferred that the content of the oxidation inhibitor be 0.1% by weight or more in 100% by weight of the interlayer film or in 100% by weight of a layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the first layer, the second layer, and the third layer may contain additives such as a coupling agent, a dispersing agent, a surfactant, a flame retardant, an antistatic agent, a pigment, a dye, an adhesive strength regulator other than metal salt, a moisture-resistance agent, a fluorescent brightening agent, and an infrared ray absorber, as necessary. One kind of these additives may be used alone, and two or more kinds thereof may be used in combination.

### (Functional film)

The interlayer film may include a functional film for the purpose of realizing a specific function. Examples of the functional film include a light control film, an infrared reflective film, a colored film, and a film with design printing, and the like.

Examples of the light control film include a film having an electrochromic layer and an electrolyte layer, and the like. The electrochromic layer is a layer containing an electrochromic compound (compound having electrochromicity). The wording having electrochromicity means having the nature that the light transmittance varies by application of a voltage.

Examples of the infrared reflective film include a resin film with metal foil, a multilayer laminate film in which a metal layer and a dielectric layer are formed on a resin film, a multilayer resin film, and a liquid crystal film, and the like. These films have the property of reflecting infrared rays.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin film is a multilayer laminate film in which any number of layers of the metal layer and the dielectric layer are alternately layered on the resin film. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

Examples of the material of the resin film in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to the both faces or either face of the metal layer. Examples of the material of the coating layer include ZnO, Al₂O₃, Ga₂O₃, InO₃, MgO, Ti, NiCr and Cu. Also, examples of the dielectric layer in the multilayer laminate film include indium oxide.

The multilayer resin film is a laminate film in which a plurality of resin films are layered. As the material of the multilayer resin film, those exemplified as the material of the resin film in the multilayer laminate film can be exemplified. The number of layered resin films in the multilayer resin film is 2 or more, and may be 3 or more, and may be 5 or more. The number of layered resin films in the multilayer resin film may be 1000 or less, and may be 100 or less, and may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of any wavelength are layered can be recited. Such a liquid crystal film is so configured that desired infrared reflecting property is obtained.

The infrared reflective film may contain infrared reflective particles. The infrared reflective particles are particles having the infrared reflecting property, and for example, tabular particles having a thickness of 1 nm or more and 1000 µm or less can be recited. For example, in the resin film in which silver nano tabular particles are dispersed, an infrared reflective film having infrared reflecting property is obtained by adjusting the thickness, the surface area and the arrangement state of the silver nano tabular particles.

For excellent performance of reflecting infrared rays, it is preferred that the functional film have such a property that the infrared transmittance is 40% or less at at least one wavelength within the range of 800 nm to 2000 nm. At least one wavelength within the range of 800 nm to 2000 nm, the infrared transmittance is more preferably 30% or less, and further preferably 20% or less.

Transmittance at each wavelength within the wavelength range of 800 nm to 2000 nm of the functional film is specifically measured in the following manner. A single functional film is prepared. Spectral transmittance at each wavelength within the wavelength of 800 nm to 2000 nm of the functional film is obtained by using a spectrophotometer ("U-4100" available from Hitachi High-Tech Corporation) in accordance with JIS R3106:1998.

### (Other details of interlayer film for laminated glass)

The interlayer film is favorably used for obtaining a laminated glass without conducting a process by an autoclave. The interlayer film may be used for obtaining a laminated by conducting a process by an autoclave.

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, and is preferably 3 mm or less, more preferably 1.5 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film and the laminated glass is further improved.

The thickness of the interlayer film is designated as T. The thickness of each of the first layer, the first surface layer and the second surface layer is preferably 0.005T or more, more preferably 0.01T or more, further preferably 0.02T or more, and is preferably 0.17T or less, more preferably 0.15T or less, still more preferably 0.13T or less, more preferably 0.1T or less, further preferably 0.09T or less. When the thickness is in the range from the aforementioned lower limit to the aforementioned upper limit, the sound insulating property is further enhanced in a wide range of temperature.

The interlayer film may be an interlayer film having a uniform thickness, or may be an interlayer film having varying thickness. The sectional shape of the interlayer film may be a rectangular shape or may be a wedge-like shape.

The interlayer film may be wound to be formed into a roll body of the interlayer film. The roll body may include a winding core and an interlayer film wound on the outer periphery of the winding core.

The distance between one end and the other end of the interlayer film is preferably 3 m or less, more preferably 2 m or less, especially preferably 1.5 m or less, and is preferably 0.5 m or more, more preferably 0.8 m or more, especially preferably 1 m or more. When the interlayer film has a lengthwise direction and a widthwise direction, the distance between one end and the other end is the distance in the lengthwise direction of the interlayer film. When the interlayer film has a square planar shape, the distance between one end and the other end is a distance between one end and the other end that are opposed to each other.

The production method of the interlayer film according to the present invention is not particularly limited. In the case of a single-layered interlayer film, examples of the production method of the interlayer film according to the present invention include a method of extruding a resin composition with an extruder, and a method of hot press molding. As a method for producing the interlayer film according to the present invention, a method of separately forming resin compositions used for constituting respective layers into respective layers, and then layering the obtained layers, and a method of coextruding resin compositions used for constituting respective layers with an extruder to layer the layers can be recited in the case of a multi-layered interlayer film.

For the reason of excellent production efficiency of the interlayer film, it is preferred that the first surface layer and the second surface layer contain the same polyvinyl acetal resin. For the reason of excellent production efficiency of the interlayer film, it is more preferred that the first surface layer and the second surface layer contain the same polyvinyl acetal resin and the same plasticizer. For the reason of excellent production efficiency of the interlayer film, it is further preferred that the first surface layer and the second surface layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method, an emboss roll method, a calender roll method, and a profile extrusion method, and the like. The emboss roll method is preferred because a large number of embosses of the protrusions and recesses, which is a quantitatively constant protrusion and recess pattern, can be formed.

### (Laminated glass)

The laminated glass according to the present invention includes a first lamination glass member, a second lamination glass member and the aforementioned interlayer film for laminated glass. In the laminated glass according to the present invention, the above-described interlayer film for laminated glass is arranged between the first lamination glass member and the second lamination glass member.

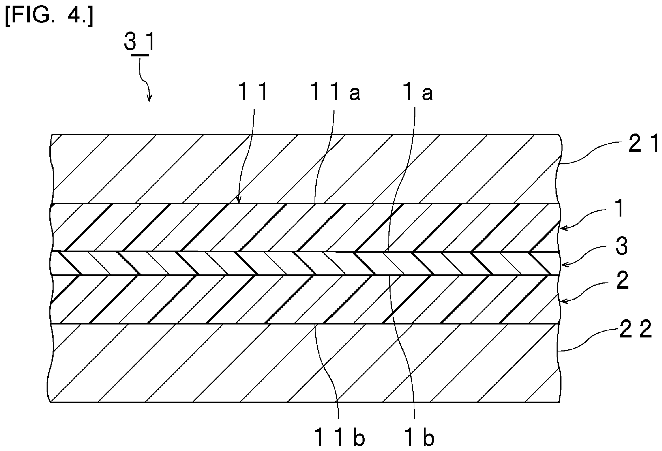

Fig. 4 is a sectional view schematically showing an example of laminated glass prepared with the interlayer film for laminated glass shown in Fig. 1.

A laminated glass 31 shown in Fig. 4 includes a first lamination glass member 21, a second lamination glass member 22 and the interlayer film 11. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11.

As described above, the laminated glass according to the present invention includes a first lamination glass member, a second lamination glass member, and an interlayer film, and the interlayer film is the interlayer film for laminated glass according to the present invention. In the laminated glass according to the present invention, the interlayer film is arranged between the first lamination glass member and the second lamination glass member.

It is preferred that the first lamination glass member be the first glass plate. It is preferred that the second lamination glass member be the second glass plate.

Examples of the first and second lamination glass members include a glass plate, and a PET (polyethylene terephthalate) film, and the like. As the laminated glass, laminated glass in which an interlayer film is sandwiched between two glass plates, as well as laminated glass in which an interlayer film is sandwiched between a glass plate and a PET film or the like is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

It is preferred that the method for producing a laminated glass include a step of arranging the interlayer film between the first lamination glass member and the second lamination glass member, and then adhering the first and the second lamination glass members and the interlayer film to obtain a laminate. In this step, it is preferred that the air remaining between the first lamination glass member, the second lamination glass member and the interlayer film be removed by passing through pressure rolls or by sucking under reduced pressure in a rubber bag. The temperature at the time of adhering is, for example, 70°C to 100°C.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method conforming to JIS K6728 "Testing methods for polyvinyl butyral" were exhibited.

The following materials were prepared.

### (Polyvinyl acetal resin)

Polyvinyl acetal resin (polyvinyl butyral resin (PVB1), average polymerization degree of 1700, content of hydroxyl group of 30.4% by mole, acetylation degree of 1.0% by mole, acetalization degree (butyralization degree) of 68.6% by mole))

Polyvinyl acetal resin (polyvinyl butyral resin (PVB2), average polymerization degree of 850, content of hydroxyl group of 31.0% by mole, acetylation degree of 1.0% by mole, acetalization degree (butyralization degree) of 68.0% by mole))

Polyvinyl acetal resin (polyvinyl butyral resin (PVB3), average polymerization degree of 1500, content of hydroxyl group of 30.8% by mole, acetylation degree of 0.5% by mole, acetalization degree (butyralization degree) of 68.7% by mole))

### (Plasticizer)

Triethylene glycol di-2-ethylhexanoate (3GO)

### (Metal salt M)

Mg mixture (50 : 50 (weight ratio) mixture of magnesium 2-ethylbutyrate and magnesium acetate)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

### (Example 1)

Preparation of composition for forming interlayer film (first layer):
The following ingredients were mixed, and kneaded sufficiently with a mixing roll to obtain a composition for forming an interlayer film (first layer).

Polyvinyl butyral resin (PVB1): 37.5 parts by weight
Polyvinyl butyral resin (PVB2): 62.5 parts by weight
Triethylene glycol di-2-ethylhexanoate (3GO): 30 parts by weight
Metal salt M (Mg mixture) : an amount that is to be 70 ppm in the obtained interlayer film
Ultraviolet ray screening agent (Tinuvin326): an amount that is to be 0.2% by weight in the obtained interlayer film
Oxidation inhibitor (BHT): an amount that is to be 0.2% by weight in the obtained interlayer film

Preparation of interlayer film:
By hot press molding a composition for forming an interlayer film (first layer), a single-layered interlayer film (thickness: 0.8 mm) having only the first layer was prepared.

### (Examples 2 to 5 and Comparative Examples 1 to 4)

A single-layered interlayer film (thickness: 0.8 mm) was repared in the same manner as that in Example 1 except that the kinds and the contents of the resins, and the content of the plasticizer were changed to those shown in Tables 1, 2.

### (Evaluation)

### (1) Glass transition temperature and softening point of first layer

The obtained first layer was stored for 12 hours in an environment at room temperature of 23 ± 2°C and a humidity of 25 ± 5%. Then, viscoelasticity was measured using a viscoelasticity measuring device "ARES-G2" available from TA Instruments. A parallel plate with a diameter of 8 mm was used as a jig, and the measurement was performed in a shearing mode under the condition in which the temperature was decreased from 100°C to -20°C at a temperature decreasing rate of 3°C/minute and under the condition of a frequency of 1 Hz and a strain of 1%. In the measurement results obtained, the peak temperature of the loss tangent was defined as the glass transition temperature Tg(°C). The temperature at which the value of the loss tangent minimizes in the temperature region between Tg(°C) and 100°C was defined as the softening point.

### (2) Weight average molecular weight and number average molecular weight of resin contained in first layer

The obtained first layer was dissolved in N-methylpyrrolidone to prepare a solution of 0.2% by weight, and the solution was filtered through a filter of 0.45 µm. As the N-methylpyrrolidone, the sample dissolving lithium bromide in a concentration of 10 mmol/ml was used. Next, using a gel permeation chromatography device ("Shodex GPC-101", detector: RI-71S, autosampler: AS101, guard column: KF-G, column: two serially-arranged LF-804), a number average molecular weight and a weight average molecular weight of the polyvinyl acetal resin in terms of polystyrene were measured. Measurement was conducted under the conditions of a flow speed of 0.5 ml/ml and a column temperature of 40°C. As a standard sample ("Shodex Standard SM-105"), ten samples having the following weight average molecular weights were used. The sample number (weight average molecular weight) is as follows: S-1.3 (1,270), S-3.2 (3,180), S-6.9 (6,940), S-22 (21,800), S-53 (52,500), S-139 (139,000), S-333 (333,000), S-609 (609,000), S-1345 (1,350,000), S-2704 (2,700,000). An approximate line obtained by plotting molecular weight with respect to elution time of a peak top of each standard sample was used as a calibration curve.

### (3) Compression creep test

The obtained first layer (interlayer film) was cut into a diameter of 8 mm to obtain a test sample. Using the obtained test sample, a compression creep test was conducted in the manner as described above. Since the first layer (interlayer film) has a thickness of 0.8 mm, the obtained test sample corresponds to the test sample A, B, C. The thickness of the test sample after the compression creep test was smaller than the thickness of the test sample before the compression creep test.

### (4) Ball dropping test (penetration resistance)

Two glass plates (clear float glass) of 30 cm long × 30 cm wide × 2.5 mm thick were prepared. The obtained interlayer film was sandwiched between these two glass plates to obtain a laminate. The obtained laminate was put into a rubber bag, and the bag was degassed for 20 minutes with a degree of vacuum of 2660 Pa (20 torr). Then the laminate under the degassed condition was heated to 90°C at a temperature rising speed of 4°C/minute, and retained at 90°C for 5 minutes, and then the temperature was decreased to 30°C. Then, the pressure was restored to normal pressure. In this way, the laminated glass was obtained.

For the obtained laminated glass, an iron ball having a diameter of 82 mm and a weight of 2260 g was dropped from the height of 4 m to the position of 150 mm inwardly from an end part of the laminated glass.

### [Criteria for judgement in ball dropping test (penetration resistance)]

Acceptance: the iron ball is kept while it is carried on the laminated glass after the ball dropping test.
Failure: the iron ball penetrates through the laminated glass and falls after the ball dropping test.

### (5) Foaming in end part of laminated glass (foaming in edge part)

Two glass plates (clear float glass) of 10 cm long × 10 cm wide × 2.5 mm thick were prepared. The obtained interlayer film was sandwiched between these two glass plates to obtain a laminate. The obtained laminate was put into a rubber bag, and the bag was degassed for 20 minutes with a degree of vacuum of 2660 Pa (20 torr). Then the laminate under the degassed condition was heated to 90°C at a temperature rising speed of 4°C/minute, and retained at 90°C for 5 minutes, and then the temperature was decreased to 30°C. Then, the pressure was restored to normal pressure. In this way, the laminated glass was obtained.

The obtained laminated glass was left to stand on a blackout curtain, and an end part of the laminated glass was visually observed, and the rate of foaming was evaluated in five steps of levels 1 to 5. At level 1, foaming is not observed at all, and a part where foaming occurs is gradually observed as the level goes up to level 5.

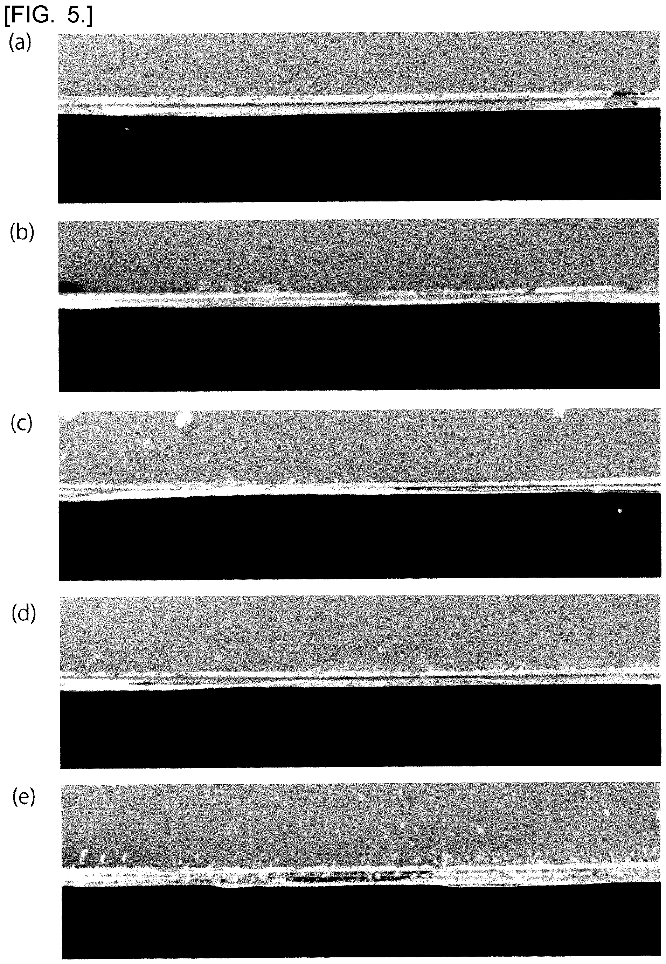

An example of photographic image judged as level 1 is shown in Fig. 5(a), an example of photographic image judged as level 2 is shown in Fig. 5(b), an example of photographic image judged as level 3 is shown in Fig. 5(c), an example of photographic image judged as level 4 is shown in Fig. 5(d), and an example of photographic image judged as level 5 is shown in Fig. 5(e).

### (6) Transparency of laminated glass

Two glass plates (clear float glass) of 30 cm long × 30 cm wide × 2.5 mm thick were prepared. The obtained interlayer film was sandwiched between these two glass plates to obtain a laminate. The obtained laminate was put into a rubber bag, and the bag was degassed for 20 minutes with a degree of vacuum of 2660 Pa (20 torr). Then the laminate under the degassed condition was heated to 95°C at a temperature rising speed of 6°C/minute, and retained at 95°C for 20 minutes, and then the temperature was decreased to 30°C. Then, the pressure was restored to normal pressure. In this way, the laminated glass was obtained.

The obtained laminated glass was left to stand on a blackout curtain, and transparency of the laminated glass was visually observed, and the level of transparency was evaluated in five steps of levels 1 to 5. At level 1, the entire surface is completely transparent, and a part where the transparency is low is gradually observed as the level goes up to level 5.

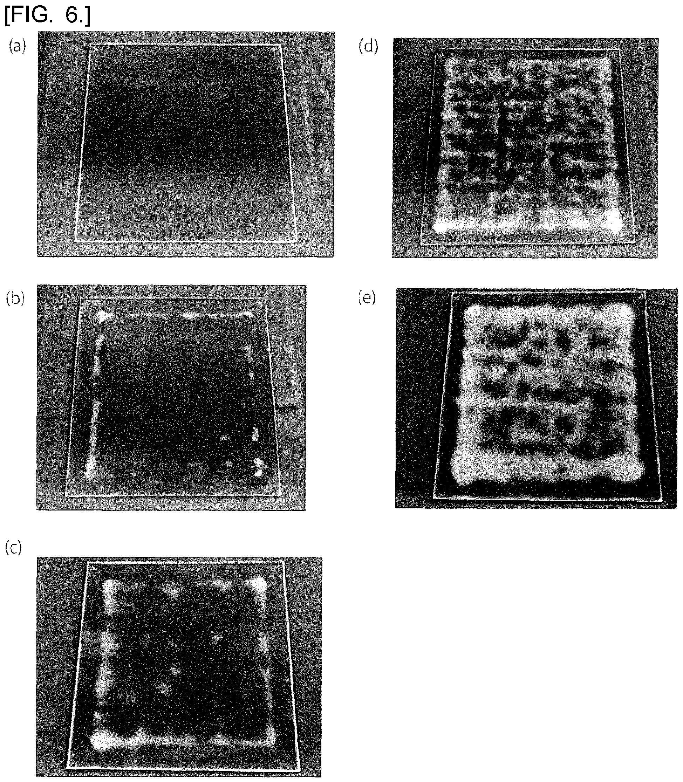

An example of photographic image judged as level 1 is shown in Fig. 6(a), an example of photographic image judged as level 2 is shown in Fig. 6(b), an example of photographic image judged as level 3 is shown in Fig. 6(c), an example of photographic image judged as level 4 is shown in Fig. 6(d), and an example of photographic image judged as level 5 is shown in Fig. 6(e).

The details and the results are shown in the following Tables 1, 2. In Table, the description of the Metal salt M, the ultraviolet ray screening agent and the oxidation inhibitor was omitted.

**[Table 1]**

| | | | | Example 1 | Example 2 | Example 3 | Example 4 | Example 5 |
|---|---|---|---|---|---|---|---|---|
| First layer (interlayer film) | First polyvinyl acetal resin (1A) | Kind | | PVB1 | PVB1 | PVB1 | PVB1 | PVB1 |
| | | Average polymerization degree | - | 1700 | 1700 | 1700 | 1700 | 1700 |
| | | Content of hydroxyl group | % by mole | 30.4 | 30.4 | 30.4 | 30.4 | 30.4 |
| | | Acetylation degree | % by mole | 1.0 | 1.0 | 1.0 | 1.0 | 1.0 |
| | | Acetalization degree | % by mole | 68.6 | 68.6 | 68.6 | 68.6 | 68.6 |
| | | Content | parts by weight | 37.5 | 75 | 50 | 50 | 25 |
| | Second polyvinyl acetal resin (1B) | Kind | | PVB2 | PVB2 | PVB2 | PVB2 | PVB2 |
| | | Average polymerization degree | - | 850 | 850 | 850 | 850 | 850 |
| | | Content of hydroxyl group | % by mole | 31.0 | 31.0 | 31.0 | 31.0 | 31.0 |
| | | Acetylation degree | % by mole | 1.0 | 1.0 | 1.0 | 1.0 | 1.0 |
| | | Acetalization degree | % by mole | 68.0 | 68.0 | 68.0 | 68.0 | 68.0 |
| | | Content | parts by weight | 62.5 | 25 | 50 | 50 | 75 |
| | Plasticizer | Kind | | 3GO | 3GO | 3GO | 3GO | 3GO |
| | | Content | parts by weight | 30 | 40 | 30 | 40 | 30 |
| Evaluation | First layer | Glass transition temperature | °C | 24.6 | 25.8 | 31.6 | 25.1 | 31.1 |
| | | Softening point | °C | 49.7 | 53.3 | 56.6 | 50.7 | 54.1 |
| | Resin contained in first layer | Weight average molecular weight | - | 211981 | 257900 | 226019 | 226019 | 193583 |
| | | Number average molecular weight | - | 72384 | 99930 | 81775 | 81775 | 65999 |
| | Compression creep test | Variation | µm | 228 | 73 | 70 | 160 | 301 |
| | Ball dropping test (penetration resistance) | | - | Acceptance | Acceptance | Acceptance | Acceptance | Acceptance |
| | Foaming in end part of laminated glass | | Level | 2 | 1 | 1 | 2 | 4 |
| | Transparency of laminated glass | | Level | 2 | 3 | 3 | 2 | 1 |

**[Table 2]**

| | | | | Comparative Example 1 | Comparative Example 2 | Comparative Example 3 | Comparative Example 4 |
|---|---|---|---|---|---|---|---|
| First layer (interlayer film) | First polyvinyl acetal resin (1A) | Kind | | PVB3 | PVB1 | | PVB1 |
| | | Average polymerization degree | - | 1500 | 1700 | | 1700 |
| | | Content of hydroxyl group | % by mole | 30.8 | 30.4 | | 30.4 |
| | | Acetylation degree | % by mole | 0.5 | 1.0 | | 1.0 |
| | | Acetalization degree | % by mole | 68.7 | 68.6 | | 68.6 |
| | | Content | parts by weight | 100 | 100 | | 75 |
| | Second polyvinyl acetal resin (1B) | Kind | | | | PVB2 | PVB2 |
| | | Average polymerization degree | - | | | 850 | 850 |
| | | Content of hydroxyl group | % by mole | | | 31.0 | 31.0 |
| | | Acetylation degree | % by mole | | | 1.0 | 1.0 |
| | | Acetalization degree | % by mole | | | 68.0 | 68.0 |
| | | Content | parts by weight | | | 100 | 25 |
| | Plasticizer | Kind | | 3GO | 3GO | 3GO | 3GO |
| | | Content | parts by weight | 40 | 35 | 25 | 30 |
| Evaluation | First layer | Glass transition temperature | °C | 28.1 | 31.5 | 37.3 | 32.4 |
| | | Softening point | °C | 56.9 | 60.9 | 60.7 | 59.1 |
| | Resin contained in first layer | Weight average molecular weight | - | 246457 | 268978 | 139572 | 257900 |
| | | Number average molecular weight | - | 108536 | 135330 | 57100 | 99930 |
| | Compression creep test | Variation | µm | 33 | 40 | 373 | 32 |
| | Ball dropping test (penetration resistance) | | - | Acceptance | Acceptance | Acceptance | Acceptance |
| | Foaming in end part of laminated glass | | Level | 1 | 1 | 5 | 1 |
| | Transparency of laminated glass | | Level | 4 | 4 | 1 | 4 |

### EXPLANATION OF SYMBOLS

1, 1B: First surface layer
2, 2B: Second surface layer
3: Intermediate layer
3B: First intermediate layer
4B: Second intermediate layer
5B: Third intermediate layer
1a, 1Ba, 2a, 2Ba: First surface
11, 11B: Interlayer film
11A: Interlayer film (first layer)
11a: First surface
11b: Second surface
21: First lamination glass member
22: Second lamination glass member
31: Laminated glass

## Claims

1. An interlayer film for laminated glass, having a one-layer structure or a two or more-layer structure,
the interlayer film including a first layer,
when a test sample A having a diameter of 8 mm and a thickness of 0.8 mm obtained by cutting out the first layer is subjected to a compression creep test, a variation in thickness of the test sample A before and after the compression creep test being 50 µm or more and 325 µm or less,
the compression creep test including: raising a temperature from 30°C to 90°C at 6°C/minute in a condition that a load of 410 g is applied to the test sample A, and retaining the temperature at 90°C for 5 minutes, and determining an absolute value of difference between a thickness of the test sample A at 30°C directly after 5 minutes retention at 30°C before starting the compression creep test, and a thickness of the test sample A directly after 5 minutes retention at 90°C at the end of the compression creep test as a variation in thickness of the test sample A before and after the compression creep test.

2. An interlayer film for laminated glass, having a one-layer structure or a two or more-layer structure,
the interlayer film including a first layer having a thickness of 200 µm or more and 900 µm or less,
when the first layer has a thickness of T_{B} µm, and a test sample B having a diameter of 8 mm and a thickness of T_{B} µm obtained by cutting out the first layer is subjected to a compression creep test, a variation in thickness of the test sample B before and after the compression creep test being 50 µm or more and 325 µm or less,
the compression creep test including: raising a temperature from 30°C to 90°C at 6°C/minute in a condition that a load of 410 g is applied to the test sample B, and retaining the temperature at 90°C for 5 minutes, and determining an absolute value of difference between a thickness of the test sample B at 30°C directly after 30 minutes retention at 30°C before starting the compression creep test, and a thickness of the test sample B directly after 5 minutes retention at 90°C at the end of the compression creep test as a variation in thickness of the test sample B before and after the compression creep test.

3. An interlayer film for laminated glass, having a one-layer structure or a two or more-layer structure,
the interlayer film including a first layer,
the interlayer film having a thickness of 80 µm or more and 1600 µm or less,
when the interlayer film has a thickness of T_{c} µm, and a test sample C having a diameter of 8 mm and a thickness of T_{c} µm obtained by cutting out the interlayer film is subjected to a compression creep test, a variation in thickness of the test sample C before and after the compression creep test being 50 µm or more and 325 µm or less,
the compression creep test including: raising a temperature from 30°C to 90°C at 6°C/minute in a condition that a load of 410 g is applied to the test sample C, and retaining the temperature at 90°C for 5 minutes, and determining an absolute value of difference between a thickness of the test sample C at 30°C at the start of the compression creep test, and a thickness of the test sample C directly after 5 minutes retention at 90°C at the end of the compression creep test as a variation in thickness of the test sample C before and after the compression creep test.

4. The interlayer film for laminated glass according to any one of claims 1 to 3, wherein the first layer contains a thermoplastic resin and a plasticizer.

5. The interlayer film for laminated glass according to claim 4, wherein the thermoplastic resin contained in the first layer is a polyvinyl acetal resin.

6. The interlayer film for laminated glass according to any one of claims 1 to 5, having a two or more-layer structure,
the interlayer film further including a second layer,
the second layer being arranged on a first surface side of the first layer.

7. The interlayer film for laminated glass according to any one of claims 1 to 6, wherein the first layer is a surface layer in the interlayer film.

8. A laminated glass comprising:
a first lamination glass member;
a second lamination glass member; and
the interlayer film for laminated glass according to any one of claims 1 to 7,
the interlayer film for laminated glass being arranged between the first lamination glass member and the second lamination glass member.
